Europäisches Patentamt

European Patent Office

Office européen des brevets

(11) Veröffentlichungsnummer: **0 125 480**
**A2**

## (12) EUROPÄISCHE PATENTANMELDUNG

(21) Anmeldenummer: **84103910.0**

(22) Anmeldetag: **09.04.84**

(51) Int. Cl.³: **G 09 B 9/00**

(30) Priorität: **15.04.83 DE 3313724**

(43) Veröffentlichungstag der Anmeldung:
**21.11.84 Patentblatt 84/47**

(84) Benannte Vertragsstaaten:
**CH FR GB LI**

(71) Anmelder: **HONEYWELL GMBH**
**Kaiserleistrasse 55**
**D-6050 Offenbach am Main(DE)**

(72) Erfinder: **Stickel, Robert, Dr. Ing.**
**Richard-Wagner-Strasse 15**
**D-6078 Neu-Isenburg(DE)**

(74) Vertreter: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Verfahren und Vorrichtung zur Sichtsimulation.**

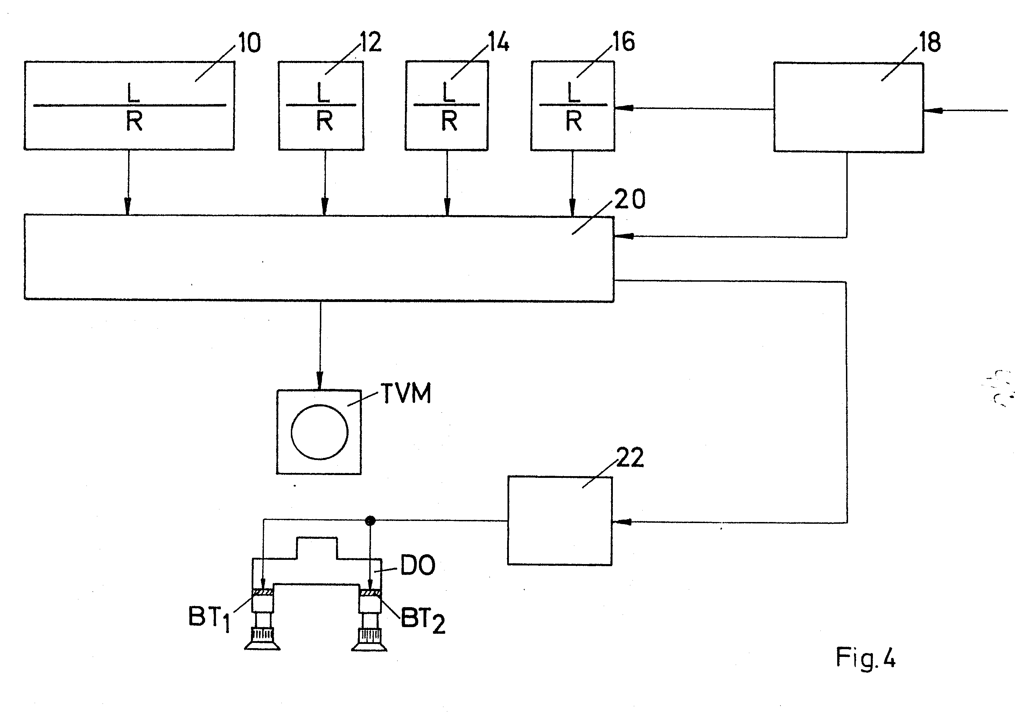

(57) Bei einem Verfahren zur Sichtsimulation für, ein Gefechtstraining gelangen in Speichern (10 bis 16) digital abgespeicherte Einzelbilder eines Geländes, von Zielen, von Geschoßspuren und von Visier-Strichbildern nach Verknüpfung und Digital/Video-Umsetzung in einer Bildsyntheseeinrichtung (20) auf einem TV-Monitor (TVM) zur Darstellung. Die Bilder sind in Form von rechten und linken Halbbildern abgespeichert, und sie werden im Halbbild- Zeilensprungverfahren zur Darstellung gebracht. Zur Simulation eines Raumbild-Entfernungsmessers sind vorzugsweise in dem Visierspeicher (16) zwei Halbbilder einer Raumbildmarke zusätzlich abgespeichert. Die Bildverschiebung der beiden Halbbilder wird entfernungsabhängig in bezug aufeinander gesteuert und eine Betrachtungsvorrichtung (D0, BT1, BT2) sorgt dafür, daß beide Halbbilder auf dem TV-Monitor (TVM) den Augen des Betrachters getrennt zugeführt werden (Figur 4).

EP 0 125 480 A2

./...

Fig. 4

HONEYWELL GmbH

Kaiserleistraße 55

6050 Offenbach am Main

11. April 1984

77100498 EP

Hz/ep

## Verfahren und Vorrichtung zur Sichtsimulation

Die vorliegende Erfindung betrifft ein Verfahren zur Sichtsimulation nach dem Gattungsbegriff des Anspruches 1 sowie eine Vorrichtung zur Durchführung dieses Verfahrens.

Aus der DE-OS 31 33 866 ist ein Verfahren zur Sichtsimulation bekannt, bei welchem zwecks Training eines Gefechtsvorganges auf einem TV-Monitor im Sehfeld der Optik einer auszubildenden Person das Bild eines Hintergrundes dargestellt und in diesen Hintergrund das Bild eines beweglichen Zieles eingeschnitten wird. Sowohl das Bild des Hintergrundes als auch das Bild des Zieles sind digital abgespeichert und gelangen nach Umsetzung in ein Videosignal zur Darstellung. Um die Gefechtssituation realistisch zu gestalten, sind sowohl Einzelobjekte im Hintergrundbild als auch die Ziele bildpunktweise mit einer Entfernungsinformation versehen, so daß durch bildpunktweisen Vergleich dieser Entfernungsinformation die Darstellung der Ziele vor bzw. hinter bestimmten Objekten ermöglicht wird. Ein solches Verfahren ist in der Fachwelt unter dem Begriff CSI-Verfahren bekannt (CSI = Computer Synthesized Imagery).

Bei einem tatsächlichen Gefecht wird häufig mit einem Raumbild-Entfernungsmesser die Entfernung eines Zieles in der Weise bestimmt, daß durch Verschiebung einer Marke deren wanderndes Raumbild auf gleiche Entfernung wie das Ziel gebracht wird. Die Entfernung des Zieles ist dann z.B. an einer mit der Verschiebung verbundenen Teilung ablesbar. Die Simulation eines derartigen Raumbild-Entfernungsmessers erweist sich daher bei der Simulation

- 2 -

0125480

einer Gefechtssituation als höchst wünschenswert.

Es ist daher die Aufgabe der vorliegenden Erfindung, das bekannte CSI-Sichtsimulationsverfahren so auszubilden, daß ein Raumbild-Entfernungsmesser ebenfalls simuliert werden kann. Die Lösung dieser Aufgabe gelingt gemäß den kennzeichnenden Merkmalen des Patentanspruches 1. Vorteilhafte Ausgestaltungen einer Vorrichtung zur Durchführung des Verfahrens sind den Unteransprüchen entnehmbar.

Anhand der Figuren der beiliegenden Zeichnung sei im folgenden das Prinzip des Raumbild-Entfernungsmessers sowie seine Simulation näher erläutert. Es zeigen:

Figur 1   eine Skizze zur Erläuterung des Funktionsprinzips des Raumbild-Entfernungsmessers;

Figur 2   eine erste Vorrichtung zur Simulation des Raumbild-Entfernungsmessers;

Figur 3   eine zweite Vorrichtung zur Simulation des Raumbild-Entfernungsmessers;

Figur 4   die Vorrichtung gemäß Figur 3 in näheren Einzelheiten.

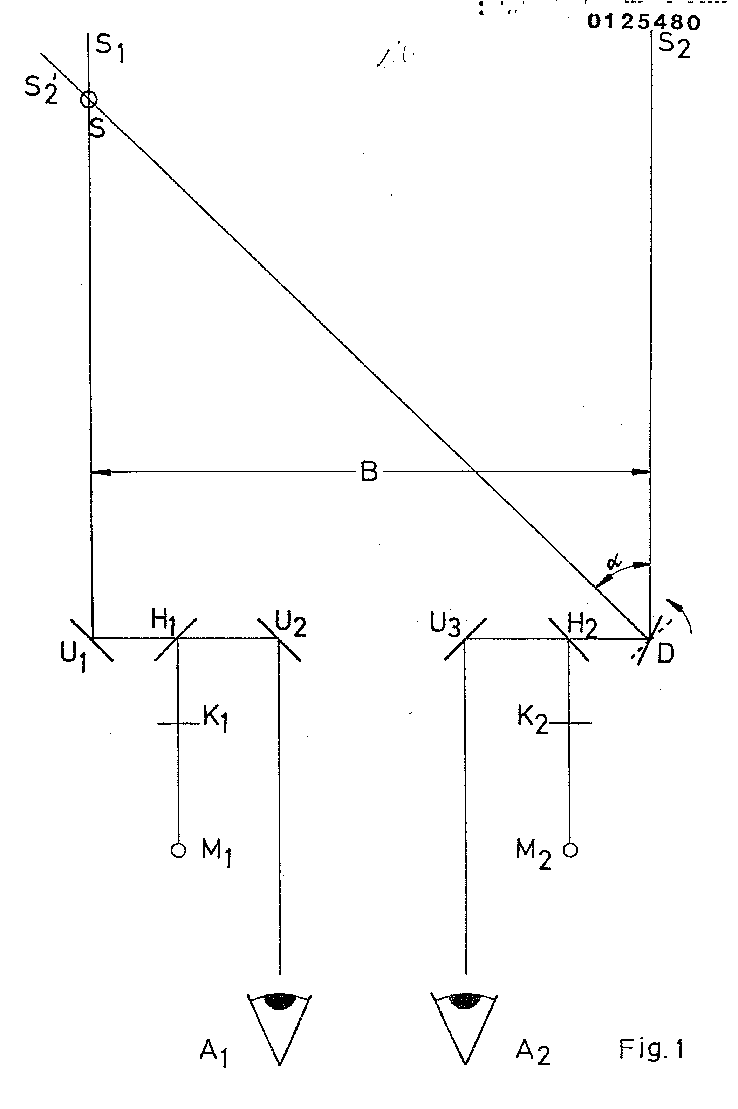

Gemäß Figur 1 ist das Prinzip des Raumbild-Entfernungsmessers dargestellt. Den beiden Augen A1, A2 eines menschlischen Betrachters werden Bilder zweier Meßmarken M1, M2 angeboten, die über zugeordnete Kollimatoren K1, K2 sowie Umlenkspiegel U1 bis U3, halbdurchlässige Spiegel H1 und H2 und einen Drehspiegel D im Raum abgebildet werden. In der gestrichelten Stellung des Drehspiegels D werden die beiden Meßmarken M1, M2 entsprechend den Strahlen S1, S2 im Unendlichen abgebildet. Beide Meßmarken M1, M2 werden von dem Auge zu einer einzigen Marke verschmolzen, die ebenfalls im Unendlichen steht. Bringt man den Drehspiegel D in die ausgezeichnete Stellung, so wird die Meßmarke M2 unter dem Winkel $\alpha$ in Richtung des Strahles S'2 abgebildet, und die Augen A1, A2 des Betrachters verschmelzen beide Strahlen S1 und S'2 in der Schnittstelle S. Der Schnittpunkt beider Meßmarken M1, M2 liegt nunmehr räumlich näher an dem Betrachter. Bei vorgegebener Basis B errechnet sich die Entfernung E in Abhängigkeit von dem Winkel $\alpha$ nach folgender Beziehung:

$$E = \frac{B}{\tan\alpha} \qquad (1)$$

Bei vorgegebener Basis läßt sich somit der Stellung des Drehspiegels D unmittelbar eine Entfernung E zuordnen. Im praktischen Anwendungsfall bringt ein Beobachter die Raumbildmarke auf gleiche Entfernung wie das Ziel im Gelände und kann daraufhin die Entfernung des Zieles ablesen.

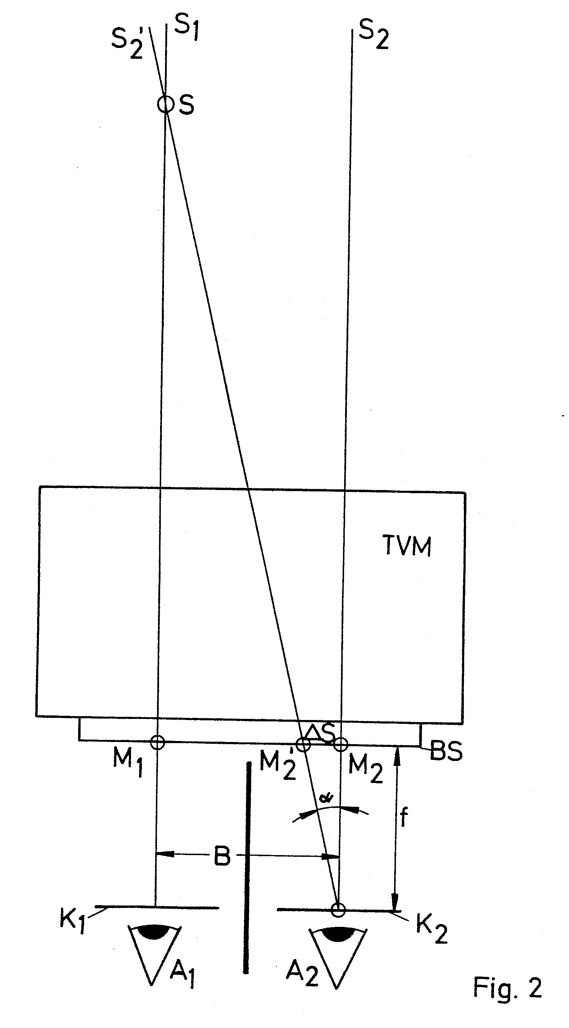

Figur 2 zeigt nun eine erste Vorrichtung, mit der der bekannte Raumbild-Entfernungsmesser gemäß Figur 1 simuliert werden kann. Zu diesem Zweck gelangen auf dem Bildschirm BS eines Fernsehmonitors TVM im Halbbild-Zeilensprungverfahren die zwei Raumbildmarken M1, M2 in Form von Halbbildern zur Darstellung. Durch eine symmetrisch zwischen beiden Augen A1, A2 angeordnete Sichtblende B erfolgt eine Trennung beider Sichtkanäle. Der Bildschirm BS und die zunächst im Augenabstand angeordneten Raumbildmarken M1, M2 werden über die Kollimatoren K1, K2 im Unendlichen abgebildet. Zur Simulation einer im Raum wandernden Raumbildmarke wird nun ein Halbbild der Raumbildmarke seitlich verschoben. Durch Verschiebung der einen Raumbildmarke M'2 auf dem Bildschirm BS um einen Wert $\Delta$ S in Richtung auf die andere Raumbildmarke M1 kommt ihr Bild aus einer Richtung, die sich von der parallelen Blickrichtung entsprechend der Entfernung unendlich um den Winkel

$$\tan\alpha = \frac{\Delta S}{f} \qquad (2)$$

unterscheidet, wobei f die Brennweite der Kollimatoren
K1, K2 darstellt.

Die Raumbildmarke erscheint daher in folgender Entfernung:

$$E = \frac{f \cdot B}{\triangle S} \qquad (3)$$

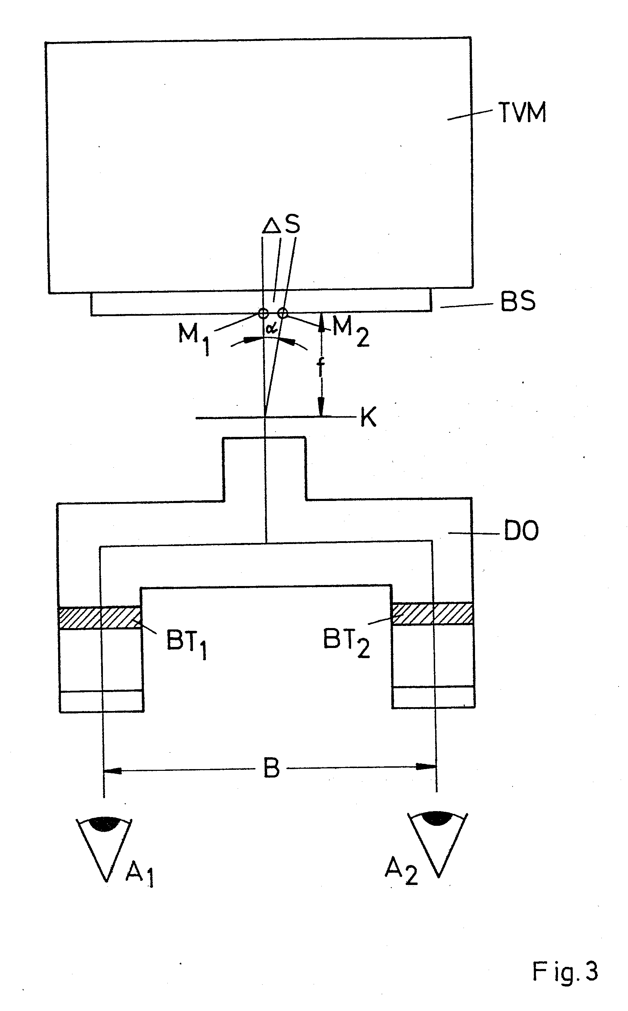

Figur 3 zeigt eine Ausführungsform einer Simulationsvorrichtung des Raumbild-Entfernungsmessers, bei der
die beiden Strahlengänge des Augenpaares A1, A2 durch
optische Verschlüsse BT1, BT2 in einem Diopter DO getrennt werden. Die optischen Verschlüsse BT1, BT2
werden hierbei synchron mit der Halbbildfrequenz betätigt. Der Bildschirm BS des Fernsehmonitors TVM wird
erneut über einen Kollimator K im Unendlichen abgebildet. Bei einer im Unendlichen stehenden Raumbildmarke liegen beide Halbbilder der Raumbildmarken M1,
M2 deckungsgleich übereinander. Wandert die Raumbildmarke näher an den Betrachter heran, so muß die eine
Raumbildmarke M2' in bezug auf die andere Raumbildmarke M1 verschoben um den Betrag $\triangle$S abgebildet werden.

Figur 4 zeigt ein Blockschaltbild eines erfindungsgemäßen
Simulators in näheren Einzelheiten. Digitale Speicher
10 bis 16 dienen der Abspeicherung eines Geländebildes,
von Zielen, von Geschoßspuren und des Visiers bzw. der
Raumbildmarken, wobei die Information jeweils in Form von
rechten und linken Halbbildern vorliegt. Da das Visier
in der Regel im Unendlichen abzubilden ist, werden das
linke und rechte Halbbild des Visiers ohne seitliche
Verschiebung zur Darstellung gelangen. Anders verhält
es sich mit den Raumbildmarken, die vorzugsweise ebenfalls im Visierspeicher 16 abgespeichert werden. Auch
die Halbbilder bezüglich verschiedener Objekte im Gelände,
bezüglich der Ziele und der Geschoßspuren, werden in
Abhängigkeit von der Entfernung eine seitliche Verschiebung bei ihrer Darstellung erfahren, um den räumlichen Eindruck zu simulieren.

Die seitliche Verschiebung wird von einem Systemrechner 18 in Abhängigkeit von der Entfernung gesteuert. Die Halbbilder aller Speicher 10 - 16 werden in einer Bildsyntheseeinrichtung 20 zusammengesetzt und nach Digital/Video-Umsetzung dem Fernsehmonitor TVM zugeführt. Eine Steuerung 22 steuert die optischen Verschlüsse BT1, BT2 in dem Diopter DO wechselweise und synchron mit der Halbbildfrequenz an, so daß sich dem Betrachter eine räumliche Szene darbietet, in der beispielsweise einem Ziel im Gelände über entsprechend gesteuerte Raumbildmarken eine bestimmte Entfernung zugeordnet werden kann.

- 6 -

0125480

Patentansprüche:

1. Verfahren zur Sichtsimulation für ein Gefechtstraining, bei welchem digital abgespeicherte Einzelbilder (Gelände, Ziele, Geschoß-Leuchtspuren und Visier-Strichbilder) nach einer Bildverknüpfung und Digital/Video-Umsetzung auf einem TV-Monitor zur Darstellung gelangen, der im Sehfeld einer Optik angeordnet ist, d a d u r c h g e k e n n z e i c h n e t , daß alle Bilder in Form von rechten und linken Halbbildern abgespeichert sind, die im Halbbild-Zeilensprungverfahren zur Darstellung gelangen, daß zur Simulation eines Raumbild-Entfernungsmessers zwei Halbbilder einer Raumbildmarke zusätzlich abgespeichert sind, wobei die Bildverschiebung der beiden Halbbilder in bezug aufeinander entfernungsabhängig gesteuert wird und daß die beiden Halbbilder den Augen des Betrachters getrennt zugeführt werden.

2. Vorrichtung zur Durchführung des Verfahrens nach Anspruch 1, g e k e n n z e i c h n e t d u r c h einen Diopter (DO) mit optischen Verschlüssen (BT1, BT2) in beiden Strahlengängen zur Betrachtung des TV-Monitorbildes.

3. Vorrichtung nach Anspruch 2, g e k e n n z e i c h n e t d u r c h eine wechselseitige Betätigung der optischen Verschlüsse (BT1, BT2), wobei die Betätigung der optischen Verschlüsse mit der Halbbildfrequenz synchronisiert ist.

4. Vorrichtung nach Anspruch 2, g e k e n n z e i c h n e t d u r c h einen Kollimator (K) zwischen Diopter (DO) und dem Bildschirm (BS) des TV-Monitors (TVM).

0125480

Fig.1

0125480

Fig. 2

Fig. 3

Fig. 4

0125480